# EUROPEAN PATENT SPECIFICATION

(11) **EP 2 781 489 B1**
(45) Date of publication and mention of the grant of the patent: **14.02.2018**
(21) Application number: 13001492.1
(22) Date of filing: 22.03.2013
(51) Int. Cl.: C03C 1/08, C03C 6/04

(54) **Glass and process for manufacturing of illusion glass**
Glas und Prozess zur Herstellung von Illusionsglas
Verre et procédé de fabrication de verre d'illusion

(43) Date of publication of application: 24.09.2014
(73) Proprietor: RC eNeM d.o.o., 1410 Zagorje ob Savi (SI)
(72) Inventor: Music, Branka, 1126 Ljubljana (SI); Rajnar, Nevenka, 1235 Radomlje (SI); Koritnik, Mateja, 1431 Dol pri Hrastniku (SI)
(74) Representative: Marn, Jure

(56) References cited:
- CN-A- 1 562 830
- CN-A- 102 206 044
- CN-A- 102 442 779
- CN-A- 102 795 778
- CN-C- 100 383 067

## Description

### Field of technology

### Glass, glass manufacturing

### Technical problem

Glass designers constantly seek new designs in production of their wares. For some time now it was fashionable to construct objects made of cracked glass, i.e. of glass having "broken" surface appearance. Logical suggestion would be to manufacture glass, which is later "broken" by application of stress (for example by dipping it in cold water). Manufacturing of such cracked glass is possible, however, its surface (especially outer surface) is sharp (broken with crevices or lines) and the objects themselves prone to shatter under weak additional stresses. Technical problem to be solved is how to construct glass with smooth surface yet with broken internal parts so the appearance is that of broken (cracked) glass while cleaning is still possible, and there is some degree of resistance against additional stress possible.

### State of the art

According to available information from literature there are very few, or close to none manufacturers of real crackle glass in the world. The only known method for the production of real crackle glass (however, it is not commonly used in glass manufacture today) is quick sinking of melted glass in cold water (temperature under 20°C), which causes cracks on the surface of the glass. During formation glass is reheated and due to extreme temperature changes during further formation the cracks become bigger and/or longer, which results in a typical crackle effect, while the cracks close within and the internal surface becomes smooth. On the glass produced according by sinking in cold water, the cracks can be felt when we touch it; however, the cracks are limited to the upper surface of glass whereby the internal surface remains smooth, without any signs of cracks. Glass acquired according to the above procedure is known as ice glass, craquelle glass and overshot glass. The crackle effect can be increased by additional colouring of the cracked surface.

### Description of new invention

The above referenced problem is solved with glass and process of manufacturing of illusion glass. Expression "illusion" refers to fact that the glass seems to be broken while at the same time holds its form. Further expressions, some of which are also used in this text, are crackle glass, internally cracked glass and similar.

The solution is provided via surprising technical effect. It was discovered, by the inventors of this invention, that when titanium(IV) oxide (TiO₂) in the concentration range essentially between 1 wt.% to 15 wt.% is added to a mixture comprised of silica sand(SiO₂) in the concentration range essentially between 40 wt.% and 80 wt.%, limestone (CaCO₃) in the concentration range essentially between 2 wt.% and 10 wt.% , dolomite (CaCO₃ x MgCO₃) in the concentration range essentially between 2 wt.% and 10 wt.% , barium carbonate (BaCO₃) in the concentration range essentially between 0.1 wt.% and 5 wt.%, with optional additional components, and this mixture is applied to procedure as described herein, the result is glass with smooth outer and inner surface and cracked, broken-like, meshed with hairline fractures like and similar appearance. Such glass is called (for purposes of this application) illusion glass with appearance of broken glass with the application of titanium(IV) oxide (TiO₂) intended of unique decorative products of the highest quality grade according to the customer's order with specific physical and chemical characteristics that allow for glass-blowing and manual production of glass products.

Such glass products manufactured by blowing or manual manufacturing or by other means known in the art of glass manufacturing have customary two surfaces - inner (toward inner side of the object, e.g. room within glass bottle earmarked for wine), and outer. According to surprising technical effect one (inner or outer) or both surfaces remain essentially smooth while material between both surfaces (i.e. between inner and outer surface of such object) has cracked appearance.

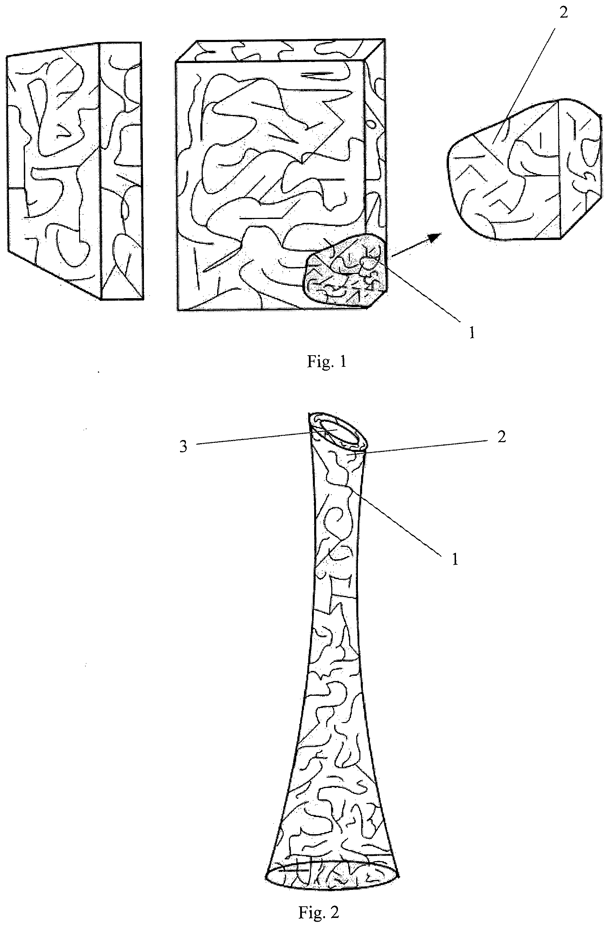

This is also seen in Figure 1. Figure 1 shows the surface (which can be inner or outer as it is a planar form) which is smooth (2), and cracks, hairline breaks or fractures (1) inside the glass. From the outside the surface seems cracked whereas on touch it is essentially smooth, and is capable to be taken care of as essentially smooth.

Figure 2 shows a vase having outer (2) and inner (3) surfaces. Between both surfaces which are essentially smooth there is cracked appearance comprised of cracks, fissures, hairline breaks or fractures (1) in essentially meshed or intertwined manner - cracks meander, collide with each other or have other appearance which is common to cracked or broken glass. As glass is still useable, this effect is denoted as "illusion glass".

Characteristics of such crackle glass are basically determined by the following characteristics of the glass: appearance, density, softening point and linear extension coefficient. These characteristics are adjusted to conditions for the manufacture of products in the field of decorative glass industry, as well as the field of ecology and environmental protection.

Efficient exploitation of crackle glass basic characteristics is possible due to the new basic procedure, crystal structure and concentration, and the size of titanium(IV) oxide (TiO₂) particles in the basic procedure for manufacture of illusion glass.

The technical problem solved by the relevant invention is the chemical composition and procedure for the manufacture of crackle glass with the application of titanium(IV) oxide in anatase or rutile crystal structures for the manual manufacture and/or blowing of glass products, including the weighing of basic raw materials for manufacture of crackle glass, and combination of common glass components such as (taken alone or in combination) of silica sand (SiO₂) in the concentration range from 40 wt.% to 80 wt.% of soda ash (Na₂Co₃) in the concentration range from 15 wt.% and 35 wt.%, potassium carbonate (K₂CO₃) in the concentration range from 1 wt.% to 6 wt.%, limestone (CaCO₃) in the concentration range from 2 wt.% to 10 wt.%, dolomite (CaCO₃ x MgCO₃) in the concentration range from 2 wt.% to 10 wt.%, barium carbonate (BaCO₃) in the concentration range from 0.1 wt.% to 5 wt.%, sodium nitrate (NaNO₃) in the concentration range from 0.05 wt.% to 5 wt.%, sodium sulphate (Na₂SO₄) in the concentration range from 0.1 wt.% to 5 wt.%, antimony trioxide (Sb₂O₃) in the concentration range from 0.01 wt.% to 0.6 wt.%, potassium aluminum silicate (K₂O x Al₂O₃ x 6 SiO₂) in the concentration range from 2.0 wt.% to 10 wt.%, zinc oxide (ZnO) - in the concentration range from 0,1 wt.% to 10 wt.% and an addition of titanium(IV) oxide (TiO₂) in the concentration range from 1 wt.% to 15 wt.% prepared according to the chloride or sulphate procedure with parts in the size range from 10 nm to 0,5 microns in the anatase or rutile crystal structure; followed by homogenisation of all input raw materials and time of mixing from 1 to 45 minutes; and gradual introduction of the homogenised mixture in the daily tank furnace where - at the temperature from 1400°C to 1500°C - melting takes place from 12 to 24 hours. Afterwards, we use the glass-blowing procedure or an automated production line to design/form the product. Finally, the reduction of stress in glass occurs when products are placed into an annealing lehr at the temperature between 520°C and 560°C, to cool down to room temperature.

Surface of the illusion glass produced with the application of titanium(IV) oxide is smooth and even. Crackle effect is the consequence of the reflection of light from the edges of titanium(IV) oxide particles.

The invention refers to the used raw materials and chemical composition, as well as the production procedure for the manufacture of crackle glass.

According to the invention the objective is attained with the application of input raw materials, chemical composition and the procedure for manufacture of crackle glass with the application of at least one of the following components:
- silica sand (SiO₂) - in the concentration range from 40 wt.% to 80 wt.%,
- soda ash (Na₂Co₃) - in the concentration range from 10 wt.% and 35 wt.%,
- potassium carbonate (K₂CO₃) - in the concentration range from 1 wt.% to 6 wt.%,
- limestone (CaCO₃) - in the concentration range from 2 wt.% to 10 wt.%,
- dolomite (CaCO₃ x MgCO₃) - in the concentration range from 2 wt.% to 10 wt.%,
- zinc oxide (ZnO) - in the concentration range from 0,1 wt.% to 10 wt.%,
- barium carbonate (BaCO₃) - in the concentration range from 0.1 wt.% to 5 wt.%,
- sodium nitrate (NaNO₃) - in the concentration range from 0.05 wt.% to 5 wt.%,
- sodium sulphate (Na₂SO₄) - in the concentration range from 0.5 wt.% to 5 wt.%,
- antimony trioxide (Sb₂O₃) - in the concentration range from 0.01 wt.% to 0.6 wt.%,
- potassium aluminum silicate (K₂O x Al₂O₃ x 6 SiO₂) - in the concentration range from 2.0 wt.% to 10 wt.%,
and further application of:
- titanium(IV) oxide (TiO₂) in the concentration range from 1 wt.% to 15 wt.% which may be prepared according to the chloride or sulphate procedure, and comprise particles in the size range from 10 nm to 0,5 microns, said titanium(IV) oxide (TiO₂) in anatase or rutile crystal structure;
and further optional application of
- Colour on the basis of spinels in the concentration range from 0.01 wt.% to 1 wt.%.

This effect is attained by the following steps:
- Homogenisation of all input materials in a paddle mixer with a homogenisation time of 1 minute to 45 minutes.
- gradual introduction of the homogenized material in a daily tank furnace where it is melted at a temperature from 1400°C to 1500°C for 12 to 24 hours;
- formation of the end-product
- final phase - reduction of stress in products inside the anealling lehr at the temperature from 520°C in 560°C and cooling down to room temperature.

The detailed ratio between specific components and the relevant synthesis process parameters are described in a way of example only in the implementation cases, to follow.

### IMPLEMENTATION CASE NO.1

We weigh the mixture for the production of glass in the following ratio: 54.2 wt.% of silica (SiO₂), 15.5 wt.% of soda ash (Na₂CO₃), 1.74 wt.% of potassium carbonate (K₂CO₃), 7.0 wt.% of limestone (CaCO₃), 4.2 wt.% of dolomite (CaCO₃ x MgCO₃), 1.8 wt.% of barium carbonate (BaCO₃), 2.4 wt.% of potassium aluminum silicate (K₂OxAl₂O₃x6SiO₂), 2 wt.% of zync oxide (ZnO), 0.09 wt.% of sodium nitrate (NaNO₃), 1.0 wt.% of sodium sulphate (Na₂SO₄), 0.07 wt.% antimony trioxide (Sb₂O₃). We mix the mixture in the paddle mixer for 15 minutes and add 10 wt.% of titanium(IV) oxide (TiO₂) in the anatase crystal structure with the size of particles of 30 nm. We homogenise the mixture for another 30 minutes.

We heat up a daily tank furnace to 1450°C and gradually add the homogenised mixture. The glass is melted at a maximum temperature of 1450°C for 16 hours. Upon the completed melting the glass-blower takes the melted glass and forms/blows the desired product.

The invention solves the problem by specifying the softening point of crackle and the appearance of crackle glass, which allows for high-quality handcrafting or blowing of glass due to the preserved initial characteristics of transparent glass.

**Table 1. Physical characteristics of glass - Implementation case no. 1:**

| **Softening point [°C]** | **Appearance** |
|---|---|
| **Standard: ASTM C338 - 93(2008) Standard Test Method for Softening Point of Glass** | |
| **671 - 679** | ***completely smooth surface, transparent with a visible spider-web structure, slightly yellow shade*** |

### IMPLEMENTATION CASE NO. 2

We weigh the mixture for the production of glass in the following ratio: 54.2 wt.% of silica (SiO₂), 15.5 wt.% of soda ash (Na₂CO₃), 1.74 wt.% of potassium carbonate (K₂CO₃), 7.0 wt.% of limestone (CaCO₃), 4.2 wt.% of dolomite (CaCO₃ x MgCO₃), 1.8 wt.% of barium carbonate (BaCO₃), 2.4 wt.% of potassium aluminum silicate (K₂OxAl₂O₃x6SiO₂), 2 wt.% of zync oxide (ZnO), 0.09 wt.% of sodium nitrate (NaNO₃), 1.0 wt.% of sodium sulphate (Na₂SO₄), 0.07 wt.% antimony trioxide (Sb₂O₃). We mix the mixture in the paddle mixer for 15 minutes and add 10 wt.% of titanium(IV) oxide (TiO₂) in the anatase crystal structure with the size of particles of 0.35 microns. We homogenise the mixture for another 15 minutes.

We heat up a daily tank furnace to 1440°C and gradually add the homogenised mixture. The glass is melted at a maximum temperature of 1440°C for 14 hours. Upon the completed melting the glass-blower takes the melted glass and forms/blows the desired product.

The invention solves the problem by specifying the softening point of crackle and the appearance of crackle glass, which allow high-quality handcrafting or blowing of glass due to the preserved initial characteristics of transparent glass.

**Table 2. Physical characteristics of glass - Implementation case no. 2:**

| **Softening point [°C]** | **Appearance** |
|---|---|
| **Standard: ASTM C338 - 93(2008) Standard Test Method for Softening Point of Glass** | |
| **671 - 679** | ***completely smooth surface, transparant with a visible spider-web structure, slightly yellow shade*** |

**IMPLEMENTATION CASE NO. 3**

We weigh the mixture for the production of glass in the following ratio: 56.4 wt.% of silica (SiO₂), 17.0 wt.% of soda ash (Na₂CO₃), 1.74 wt.% of potassium carbonate (K₂CO₃), 7.0 wt.% of limestone (CaCO₃), 4.2 wt.% of dolomite (CaCO₃ x MgCO₃), 1.2 wt.% of barium carbonate (BaCO₃), 0.09 wt.% of sodium nitrate (NaNO₃), 0.8 wt.% of sodium sulphate (Na₂SO₄), 0.07 wt.% antimony trioxide (Sb₂O₃). 3.5 wt.% zinc oxide (ZnO). We mix the mixture in the paddle mixer for 15 minutes and add 8 wt.% of titanium(IV) oxide (TiO₂) in the rutile crystal structure with the size of particles of 50 nm. We homogenise the mixture for another 30 minutes.

We heat up a daily tank furnace to 1455°C and gradually add the homogenised mixture. The glass is melted at a maximum temperature of 1455°C for 15 hours. Upon the completed melting the glass-blower takes the melted glass and forms/blows the desired product.

The invention solves the problem by specifying the softening point and the appearance of crackle glass, which allow high-quality handcrafting or blowing of glass due to the preserved initial characteristics of transparent glass.

**Table 3 . Physical characteristics of glass - Implementation case no. 3:**

| **Softening point [°C]** | **Appearance** |
|---|---|
| **Standard: ASTM C338 - 93(2008) Standard Test Method for Softening Point of Glass** | |
| **671 - 679** | ***completely smooth surface, transparent with a visible spider-web structure, slightly yellow shade*** |

### IMPLEMENTATION CASE NO. 4

We weigh the mixture for the production of glass in the following ratio: 55.2 wt.% of silica (SiO₂), 16.5 wt.% of soda ash (Na₂CO₃), 1.74 wt.% of potassium carbonate (K₂CO₃), 7.0 wt.% of limestone (CaCO₃), 4.2 wt.% of dolomite (CaCO₃ x MgCO₃), 1.8 wt.% of barium carbonate (BaCO₃), 2.4 wt.% of potassium aluminum silicate (K₂OxAl₂O₃x6SiO₂), 1.9 wt.% of zync oxide (ZnO), 0.09 wt.% of sodium nitrate (NaNO₃), 1.0 wt.% of sodium sulphate (Na₂SO₄), 0.07 wt.% antimony trioxide (Sb₂O₃). We mix the mixture in the paddle mixer for 15 minutes and add 0.1 wt.% of Cr _A1 spinel pigment and 7.9 wt.% of titanium(IV) oxide (TiO₂) in the anatase crystal structure with the size of particles of 30 nm. We homogenise the mixture for another 30 minutes.

We heat up a daily tank furnace to 1450°C and gradually add the homogenised mixture. The glass is melted at a maximum temperature of 1450°C for 16 hours. Upon the completed melting the glass-blower takes the melted glass and forms/blows the desired product.

The invention solves the problem by specifying the softening point and the appearance of crackle glass, which allow high-quality handcrafting or blowing of glass due to the preserved initial characteristics of transparent glass.

**Table 4. Physical characteristics of glass - Implementation case no. 4:**

| **Softening point [°C]** | **Appearance** |
|---|---|
| **Standard: ASTM C338 - 93(2008) Standard Test Method for Softening Point of Glass** | |
| **671 - 679** | ***completely smooth surface, transparent with a visible spider-web structure, slightly green shade*** |

## Claims

1. Glass derived from a glass batch comprising silica sand(SiO₂) in the concentration range essentially between 40 wt.% and 80 wt.%, limestone (CaCO₃) in the concentration range essentially between 2 wt.% and 10 wt.% , dolomite (CaCO₃ x MgCO₃) in the concentration range essentially between 2 wt.% and 10 wt.%, barium carbonate (BaCO₃) in the concentration range essentially between 0.1 wt.% and 5 wt.%, and titanium(IV) oxide (TiO₂) in the concentration range between 1 wt.% to 15 wt. % **characterised in that** the glass has been treated to produce a craquelle glass with a smooth outer and inner surface.

2. Glass according to claim 1 wherein said titanium(IV) oxide (TiO₂) is in form of anatase or rutile crystal structures.

3. Glass according to claim 1 having smooth surface on outer (2) or inner (3), or both inner (3) and outer (2) sides with fractures (1) appearance between surfaces (2, 3) preferably in meshed or intertwined form.

4. Glass according to any of claims 1 to 3 wherein said glass further comprises color on the basis of spinels in the concentration range from 0.01 wt.% to I wt.%.

5. Glass according to any of claims I to 4 wherein one or more additional components is chosen from the group comprising potassium carbonate (K₂CO₃) in the concentration range essentially from 1 wt.% to 6 wt.%, sodium nitrate (NaNO₃) in the concentration range essentially from 0.05 wt.% to 5 wt.%, sodium sulphate (Na₂SO₄) in the concentration range essentially from 0,5 wt.% to 5 wt.%, antimony trioxide (Sb₂O₃) in the concentration range essentially from 0.01 wt.% to 0.6 wt.%, potassium aluminum silicate (K₂O x Al₂O₃ x 6 SiO₂) in the concentration range essentially from 2.0 wt.% to 10 wt.%.

6. Glass according to any of the preceding claims comprising silica sand(SiO₂) in the concentration range essentially between 50 wt.% and 60 wt.% preferably between 54.2 wt.% and 56.4 wt.%, soda ash (Na₂Co₃) in the concentration range essentially from 13 wt.% and 18 wt.% preferably between 15.5 wt.% and 17 wt.%, potassium carbonate (K₂CO₃) in the concentration range essentially from 1 wt.% to 3 wt.% preferably around 1.74 wt.%, limestone (CaCO₃) in the concentration range essentially between 8 wt.% and 9 wt.% preferably around 7 wt.%, dolomite (CaCO₃ x MgCO₃) in the concentration range essentially between 3 wt.% and 5 wt.% preferably around 4.2 wt.%, barium carbonate (BaCO₃) in the concentration range essentially between 1 wt.% and 3 wt.% preferably between 1.2 wt.% and 1.8 wt.%, zinc oxide (ZnO) in the concentration range essentially from 1 wt.% to 4 wt.% between 2 wt.% and 3.5 wt.%, sodium nitrate (NaNO₃) in the concentration range essentially from 0.05 wt.% to 2 wt.% preferably around 0.09 wt.%, sodium sulphate (Na₂SO₄) in the concentration range essentially from 0,5 wt.% to 2 wt.% between 0.8 wt.% and 1 wt.%, antimony trioxide (Sb₂O₃) in the concentration range essentially from 0.03 wt.% to 0.2 wt.% preferably around 0.07 wt.%, and titanium(IV) oxide (TiO₂) in the concentration range essentially between 5 wt.% to 15 wt.% preferably between 7.9 wt.% and 10 wt.%.

7. Glass according to claim 6 further comprising potassium aluminum silicate (K₂O x Al₂O₃ x 6 SiO₂) in the concentration range essentially from 2.0 wt.% to 4 wt.% preferably around 2,4 wt.%,

8. Glass according to claim 6 or claim 7 wherein titanium(IV) oxide (TiO₂) is in the anatase crystal structure with the size of particles of between 10 nm and 65 nm preferably between 30 nm and 50 nm.

9. Glass according to claim 6 or claim 7 wherein titanium(IV) oxide (TiO₂) is in the anatase crystal structure with the size of particles of between 100 and 450 nm preferably around 350 nm.

10. Glass according to claim 6 or claim 7 wherein titanium(IV) oxide (TiO₂) is in the rutile crystal structure with the size of particles of between 20 nm and 80 nm preferably around 50 nm.

11. Glass according to any of the claims 6 to 9 further comprising Cr _Al spinel pigment in the concentration range essentially between 0.05 wt.% to 0.2 wt.% preferably around 0.1 wt.%.

12. Glass according to any of the preceding claims wherein particles of titanium(IV) oxide (TiO₂) are in the size range from 10 nm to 0,5 microns.

13. Process for manufacturing a craquelle glass comprising the steps of
• Homogenisation in a paddle mixer with a homogenisation time between 1 minute and 45 minutes of input materials for glass derived from a glass batch according to claim 1;
• gradual introduction of the homogenized material in a daily tank furnace where it is melted at a temperature from 1400°C to 1500°C for 12 to 24 hours;
• reduction of stress in products inside the anealling lehr at the temperature from 520°C to 560°C and cooling down to room temperature.

14. Process according to claim 11 wherein the homogenized material is melted at a temperature between 1430°C to 1460°C for 13 to 17 hours, preferably between 1440°C to 1455°C for 14 to 16 hours.

## Patentansprüche

1. Glas, das von einer Glascharge umfassend Quarzsand (SiO₂) im Konzentrationsbereich im Wesentlichen zwischen 40 Gew.-% und 80 Gew.-%, Kalkstein (CaCO₃) im Konzentrationsbereich im Wesentlichen zwischen 2 Gew.-% und 10 Gew.-% , Dolomit (CaCO₃ x MgCO₃) im Konzentrationsbereich im Wesentlichen zwischen 2 Gew.-% und 10 Gew.-% , Bariumkarbonat (BaCO₃) im Konzentrationsbereich im Wesentlichen zwischen 0,1 Gew.-% und 5 Gew.-%, und Titan(IV)-Oxid (TiO₂) im Konzentrationsbereich zwischen 1 Gew.-% bis 15 Gew.-% gewonnen ist, **dadurch gekennzeichnet, dass** das Glas behandelt worden ist, um ein Craquele-Glas mit einer glatten äußeren und inneren Oberfläche zu produzieren.

2. Glas nach Anspruch 1, wobei das Titan(IV)-Oxid (TiO₂) in Form von Anatas- oder Rutil-Kristallstrukturen ist.

3. Glas nach Anspruch 1, aufweisend glatte Oberfläche auf der äußeren (2) oder inneren (3), oder sowohl der inneren (3) als auch äußeren (2) Seite mit Bruch-(1)-Aussehen zwischen den Oberflächen (2, 3), vorzugsweise in netzartiger oder verflochtener Form.

4. Glas nach einem der Ansprüche 1 bis 3, wobei das Glas ferner Farbe auf Basis von Spinellen im Konzentrationsbereich von 0,01 Gew.-% bis 1 Gew.-% umfasst.

5. Glas nach einem der Ansprüche 1 bis 4, wobei eine oder mehrere zusätzliche Komponenten aus der Gruppe umfassend Kaliumkarbonat (K₂CO₃) im Konzentrationsbereich im Wesentlichen von 1 Gew.-% bis 6 Gew.-%, Natriumnitrat (NaNO₃) im Konzentrationsbereich im Wesentlichen von 0,05 Gew.-% bis 5 Gew.-%, Natriumsulfat (Na₂SO₄) im Konzentrationsbereich im Wesentlichen von 0,5 Gew.-% bis 5 Gew.-%, Antimontrioxid (Sb₂O₃) im Konzentrationsbereich im Wesentlichen von 0,01 Gew.-% bis 0,6 Gew.-%, Kalium-Aluminium-Silikat (K₂O x Al₂O₃ x 6 SiO₂) im Konzentrationsbereich im Wesentlichen von 2,0 Gew.-% bis 10 Gew.-% gewählt ist.

6. Glas nach einem der vorhergehenden Ansprüche, umfassend Quarzsand (SiO₂) im Konzentrationsbereich im Wesentlichen zwischen 50 Gew.-% und 60 Gew.-%, vorzugsweise zwischen 54,2 Gew.-% und 56,4 Gew.-%, kalzinierte Soda (Na₂Co₃) im Konzentrationsbereich im Wesentlichen von 13 Gew.-% und 18 Gew.-%, vorzugsweise zwischen 15,5 Gew.-% und 17 Gew.-%, Kaliumkarbonat (K₂CO₃) im Konzentrationsbereich im Wesentlichen von 1 Gew.-% bis 3 Gew.-%, vorzugsweise ungefähr 1,74 Gew.-%, Kalkstein (CaC03) im Konzentrationsbereich im Wesentlichen zwischen 8 Gew.-% und 9 Gew.-%, vorzugsweise ungefähr 7 Gew.-%, Dolomit (CaCO₃ x MgCO₃) im Konzentrationsbereich im Wesentlichen zwischen 3 Gew.-% und 5 Gew.-%, vorzugsweise ungefähr 4,2 Gew.-%, Bariumkarbonat (BaCO₃) im Konzentrationsbereich im Wesentlichen zwischen 1 Gew.-% und 3 Gew.-%, vorzugsweise zwischen 1,2 Gew.-% und 1,8 Gew.-%, Zinkoxid (ZnO) im Konzentrationsbereich im Wesentlichen zwischen 1 Gew.-% bis 4 Gew.-% zwischen 2 Gew.-% und 3,5 Gew.-%, Natriumnitrat (NaNO₃) im Konzentrationsbereich im Wesentlichen zwischen 0,05 Gew.-% bis 2 Gew.-%, vorzugsweise ungefähr 0,09 Gew.-%, Natriumsulfat (Na₂SO₄) im Konzentrationsbereich im Wesentlichen zwischen 0,5 Gew.-% bis 2 Gew.-% zwischen 0,8 Gew.-% und 1 Gew.-%, Antimontrioxid (Sb₂O₃) im Konzentrationsbereich im Wesentlichen zwischen 0,03 Gew.-% bis 0,2 Gew.-%, vorzugsweise ungefähr 0,07 Gew.-%, und Titan(IV)-Oxid (TiO₂) im Konzentrationsbereich im Wesentlichen zwischen 5 Gew.-% bis 15 Gew.-%, vorzugsweise zwischen 7,9 Gew.-% und 10 Gew.-%.

7. Glas nach Anspruch 6, ferner umfassend Kalium-Aluminium-Silikat (K₂O x Al₂O₃ x 6 SiO₂) im Konzentrationsbereich im Wesentlichen zwischen 2,0 Gew.-% bis 4 Gew.-%, vorzugsweise ungefähr 2,4 Gew.-%.

8. Glas nach Anspruch 6 oder Anspruch 7, wobei Titan(IV)-Oxid (TiO₂) in der Anatas-Kristallstruktur mit der Partikelgröße von zwischen 10 nm und 65 nm, vorzugsweise zwischen 30 nm und 50 nm, ist.

9. Glas nach Anspruch 6 oder Anspruch 7, wobei Titan(IV)-Oxid (TiO₂) in der Anatas-Kristallstruktur mit der Partikelgröße von zwischen 100 und 450 nm, vorzugsweise ungefähr 350 nm, ist.

10. Glas nach Anspruch 6 oder Anspruch 7, wobei Titan(IV)-Oxid (TiO₂) in der Rutil-Kristallstruktur mit der Partikelgröße von zwischen 20 nm und 80 nm, vorzugsweise ungefähr 50 nm, ist.

11. Glas nach einem der Ansprüche 6 bis 9, ferner umfassend Cr _Al-Spinellpigment im Konzentrationsbereich im Wesentlichen zwischen 0,05 Gew.-% bis 0,2 Gew.-%, vorzugsweise ungefähr 0,1 Gew.-%.

12. Glas nach einem der vorhergehenden Ansprüche, wobei Partikeln aus Titan(IV)-Oxide (TiO₂) im Größenbereich von 10 nm bis 0,5 Mikron sind.

13. Verfahren zum Herstellen eines Craquele-Glases, umfassend die Schritte
• Homogenisieren in einem Paddelmischer mit einer Homogenisierungszeit zwischen 1 Minute und 45 Minuten von Eingangsmaterialien für aus einer Glascharge nach Anspruch 1 gewonnenes Glas;
• schrittweises Einführen des homogenisierten Materials in einem Tageswannenofen, wo es bei einer Temperatur von 1400°C bis 1500°C für 12 bis 24 Stunden geschmolzen wird;
• Reduzieren von Spannungen in Produkten innerhalb des Aushärte-Kühlofens bei der Temperatur von 520°C bis 560°C und Abkühlen auf Raumtemperatur.

14. Verfahren nach Anspruch 11, wobei das homogenisierte Material bei einer Temperatur zwischen 1430°C bis 1460°C für 13 bis 17 Stunden, vorzugsweise zwischen 1440°C bis 1455°C für 14 bis 16 Stunden, geschmolzen wird.

## Revendications

1. Verre dérivé d'un lot de verres comprenant du sable siliceux (SiO₂) dans la plage de concentrations comprise essentiellement entre 40 % en poids et 80 % en poids, du calcaire (CaCO₃) dans la plage de concentrations comprise essentiellement entre 2 % en poids et 10 % en poids, de la dolomite (CaCO₃ x MgCO₃) dans la plage de concentrations comprise essentiellement entre 2 % en poids et 10 % en poids, du carbonate de baryum (BaCO₃) dans la plage de concentrations comprise essentiellement entre 0,1 % en poids et 5 % en poids et de l'oxyde de titane (IV) (TiO₂) dans la plage de concentrations comprise entre 1 % en poids et 15 % en poids **caractérisé en ce que** le verre a été traité pour produire un verre craquelle avec une surface externe et interne lisse.

2. Verre selon la revendication 1, ledit oxyde de titane (IV) (TiO₂) étant sous la forme de structures cristallines d'anatase ou de rutile.

3. Verre selon la revendication 1, possédant une surface lisse sur les côtés externe (2) et/ou interne (3), avec une apparence de fractures (1) entre les surfaces (2, 3) de préférence en forme de mailles ou d'entrelacs.

4. Verre selon l'une quelconque des revendications 1 à 3, ledit verre comprenant en outre une couleur à base de spinelles dans la plage de concentrations allant de 0,01 % en poids à 1 % en poids.

5. Verre selon une quelconque des revendications 1 à 4, un ou plusieurs composants supplémentaires étant choisis dans le groupe comprenant du carbonate de potassium (K₂CO₃) dans la plage de concentrations allant essentiellement de 1 % en poids à 6 % en poids, du nitrate de sodium (NaNO₃) dans la plage de concentrations allant essentiellement de 0,05 % en poids à 5 % en poids, du sulfate de sodium (Na₂SO₄) dans la plage de concentrations allant essentiellement de 0,5 % en poids à 5 % en poids, du trioxyde d'antimoine (Sb₂O₃) dans la plage de concentrations allant essentiellement de 0,01 % en poids à 0,6 % en poids, du silicate d'aluminium de potassium (K₂O x Al₂O₃ x 6 SiO₂) dans la plage de concentrations allant essentiellement de 2,0 % en poids à 10 % en poids.

6. Verre selon l'une quelconque des revendications précédentes, comprenant du sable siliceux (SiO₂) dans la plage de concentrations comprise essentiellement entre 50 % en poids et 60 % en poids de préférence entre 54,2 % en poids et 56,4 % en poids, du carbonate de sodium (Na₂Co₃) dans la plage de concentrations comprise essentiellement entre 13 % en poids et 18 % en poids de préférence entre 15,5 % en poids et 17 % en poids, du carbonate de potassium (K₂CO₃) dans la plage de concentrations comprise essentiellement entre 1 % en poids et 3 % en poids, étant de préférence d'environ 1,74 % en poids, du calcaire (CaCO₃) dans la plage de concentrations comprise essentiellement entre 8 % en poids et 9 % en poids, étant de préférence d'environ 7 % en poids, de la dolomite (CaCO₃ x MgCO₃) dans la plage de concentrations comprise essentiellement entre 3 % en poids et 5 % en poids, étant de préférence d'environ 4,2 % en poids, du carbonate de baryum (BaCO₃) dans la plage de concentrations comprise entre 1 % en poids et 3 % en poids, de préférence entre 1,2 % en poids et 1,8 % en poids, de l'oxyde de zinc (ZnO) dans la plage de concentrations comprise essentiellement entre 1 % en poids et 4 % en poids entre 2 % en poids et 3,5 % en poids, du nitrate de sodium (NaNO₃) dans la plage de concentrations comprise essentiellement entre 0,05 % en poids et 2 % en poids, étant de préférence d'environ 0,09 % en poids, du sulfate de sodium (Na₂SO₄) dans la plage de concentrations comprise essentiellement entre 0,5 % en poids et 2 % en poids, entre 0,8 % en poids et 1 % en poids, du trioxyde d'antimoine (Sb₂O₃) dans la plage de concentrations comprise essentiellement entre 0,03 % en poids et 0,2 % en poids, étant de préférence d'environ 0,07 % en poids et de l'oxyde de titane (IV) (TiO₂) dans la plage de concentrations comprise essentiellement entre 5 % en poids et 15 % en poids, de préférence entre 7,9 % en poids et 10 % en poids.

7. Verre selon la revendication 6, comprenant en outre du silicate d'aluminium de potassium (K₂O x Al₂O₃ x 6 SiO₂) dans la plage de concentrations comprise essentiellement entre 2,0 % en poids et 4 % en poids, étant de préférence d'environ 2,4 % en poids.

8. Verre selon la revendication 6 ou 7, ledit oxyde de titane (IV) (TiO₂) étant dans la structure cristalline d'anatase, ladite taille des particules étant comprise entre 10 nm et 65 nm, de préférence entre 30 nm et 50 nm.

9. Verre selon la revendication 6 ou 7, ledit oxyde de titane (IV) (TiO₂) étant dans la structure cristalline d'anatase, ladite taille des particules étant comprise entre 100 et 450 nm, étant de préférence d'environ 350 nm.

10. Verre selon la revendication 6 ou 7, ledit oxyde de titane (IV) (TiO₂) étant dans la structure cristalline de rutile, ladite taille des particules étant comprise entre 20 nm et 80 nm, étant de préférence d'environ 50 nm.

11. Verre selon l'une quelconque des revendications 6 à 9, comprenant en outre un pigment de spinelle Cr_Al dans la plage de concentrations comprise essentiellement entre 0,05 % en poids et 0,2 % en poids, étant de préférence d'environ 0,1 % en poids.

12. Verre selon l'une quelconque des revendications précédentes, lesdites particules d'oxyde de titane (IV) (TiO₂) étant dans la plage de tailles allant de 10 nm à 0,5 microns.

13. Procédé permettant la fabrication d'un verre craquelle comprenant les étapes de
• homogénéisation dans un mélangeur à ailettes avec une durée d'homogénéisation comprise entre 1 minute et 45 minutes des matériaux de départ pour un verre dérivant d'un lot de verres selon la revendication 1 ;
• introduction progressive du matériau homogénéisé dans un four à cuve journalier où il est fondu à une température allant de 1400°C à 1500°C pendant 12 à 24 heures ;
• réduction des contraintes dans les produits à l'intérieur de la galerie de recuisson à la température allant de 520°C à 560°C et refroidissement à température ambiante.

14. Procédé selon la revendication 11, ledit matériau homogénéisé étant fondu à une température comprise entre 1430°C et 1460°C pendant 13 à 17 heures, de préférence entre 1440°C et 1455°C pendant 14 à 16 heures.
